# EUROPÄISCHE PATENTSCHRIFT

(11) **EP 3 657 758 B1**
(45) Veröffentlichungstag und Bekanntmachung des Hinweises auf die Patenterteilung: **26.05.2021**
(21) Anmeldenummer: 18207295.9
(22) Anmeldetag: 20.11.2018
(51) Int. Cl.: H04L 29/08, H04L 12/40

(54) **VERFAHREN ZUR FUNKTIONAL SICHEREN VERBINDUNGSIDENTIFIZIERUNG**
METHOD FOR FUNCTIONALLY SECURE CONNECTION IDENTIFICATION
PROCÉDÉ D'IDENTIFICATION DE CONNEXION FONCTIONNELLEMENT SÛRE

(43) Veröffentlichungstag der Anmeldung: 27.05.2020
(73) Patentinhaber: Siemens Aktiengesellschaft, 80333 München (DE)
(72) Erfinder: Hubert, Johannes, 90559 Burgthann (DE); Meyer, Thomas Markus, 90475 Nürnberg (DE); Barthel, Herbert, 91074 Herzogenaurach (DE); Walter, Maximilian, 90408 Nürnberg (DE)

(56) Entgegenhaltungen:
- US-A1- 2018 091 245
- PROFIBUS NUTZERORGANISATION E V PNO ED - PROFIBUS NUTZERORGANISATION E V PNO: "PROFIsafe Systembeschreibung Technologie und Anwendung", INTERNET CITATION, November 2010 (2010-11), Seiten 1-26, XP002657152, Gefunden im Internet: URL:http://www.profibus.com/nc/downloads/d ownloads/profisafe-technology-and-applicat ion-system-description/downloads/9595 [gefunden am 2011-08-18]

## Beschreibung

Die Erfindung betrifft ein Verfahren zur funktional sicheren Verbindungsidentifizierung für einen Datenaustausch mittels eines Telegramms zwischen einem Quell-Datendienst und einem Senke-Datendienst über einen Kommunikationskanal in einem Kommunikationssystem, wobei dem Quell-Datendienst ein eindeutiger Identifikator zugewiesen wird, und je ein Zeitstempel zu einem zu versendenden Telegramm im Quell-Datendienst zugeordnet wird.

Die Erfindung betrifft das technische Gebiet der fehlersicheren Kommunikation, die u.a. für die Kommunikation zwischen Feldgeräten, Steuerungskomponenten und ähnlichen Einrichtungen in der sicherheitsgerichteten industriellen Prozessautomatisierung oder Fertigungsautomatisierung eingesetzt wird.

Eine solche fehlersichere Kommunikation, auch F-Kommunikation genannt, wird insbesondere bei sicherheitsrelevanten Anwendungen eingesetzt, insbesondere dann, wenn Fehler in der Kommunikation zur Gefährdung von Menschen, Tieren oder Sachwerten führen können. Eine sicherheitsgerichtete Kommunikationsverbindung über Profisafe in einer Punkt-zu-Punkt-Verbindung ist bekannt. Da es aber in der fortschreitenden Kommunikationstechnik auch Konzepte, wie Publisher/Subscriber-, Broadcast- oder Multicast-Mechanismen gibt, die mit Punkt-zu-Punkt-Verbindungen nicht hinreichend unterstützt werden können, ist hier eine Lösung gesucht.

Nach dem derzeit bekannten Stand der Technik wird im Rahmen von fehlersicherer Kommunikation (Profisafe) eine Punkt-zu-Punkt-Verbindung aufgebaut. Über diese Punkt-zu-Punkt-Verbindung wurden immer bidirektional Daten geschickt, die mindestens aus einem Quittiertelegramm bestanden. Bei Protokollen wie Profisafe konnte das Quittungstelegramm auch Nutzdaten enthalten. Über das bisherige Zusammenspiel der bidirektionalen Kommunikation haben sich die beiden Verbindungsdaten immer gegenseitig überwacht.

Die Dokumente US 2018/091245 und PROFIBUS NUTZERORGANISATION E V PNO ED - PROFIBUS NUTZERORGANISATION E V PNO: "PROFIsafe Systembeschreibung Technologie und Anwendung",INTERNET CITATION, November 2010 (2010-11), Seiten 1-26, XP002657152, beschreiben aus dem Stand der Technik bekannte Systeme.

Es ist nun Aufgabe der vorliegenden Erfindung ein Verfahren zur funktional sicheren Verbindungsidentifizierung für einen Datenaustausch anzugeben, wobei bevorzugt Kommunikationskonzepte wie z.B. Publisher/Subscriber eingesetzt werden können.

Für das eingangs genannte Verfahren wird die Aufgabe dadurch gelöst, dass im Senke-Datendienst geprüft wird, ob der Zeitstempel eines gerade eingehenden Telegramms älter ist als der Zeitstempel eines Vorgängertelegramms, wobei mit dem Eingang des Vorgängertelegramms ein Überwachungszähler gestartet wird und zusätzlich geprüft wird, ob das gerade eingehende Telegramm innerhalb einer vorgebbaren Überwachungszeit angekommen ist, zusätzlich wird im Senke-Datendienst ein lokaler Zeitstempel einer lokalen Zeitbasis mit dem zugehörigen Zeitstempel des gerade eingehenden Telegramms verglichen und es wird geprüft, ob eine sich durch den Vergleich ergebene Differenz eine vorgebbare Zeitdauer nicht übersteigt, ein im Senke-Datendienst ankommendes Telegramm nur dann als gültig übernommen wird, wenn zusätzlich erfüllt ist, dass der Zeitstempel des ankommenden Telegramms größer ist als der Zeitstempel des zuletzt als gültig übernommenen Telegramms, wobei in einem letzten Schritt, die Daten als gültig erklärt werden, wenn die vorangegangenen Prüfungen positiv ausgefallen sind, andererseits wird eine fehlersichere Reaktion ausgelöst.

Mit Vorteil ist jetzt eine Lösung aufgezeigt, bei welcher ein Konzept für ein Safety-Protokoll und Safety-Kommunikationsfunktionen bereitgestellt ist, welches keinen Rückkanal (Quittung) mehr erfordert. Es kann nun vorteilhafter Weise für einen Publisher/Subscriber oder für einen Broadcast-Betrieb oder ähnliche Kommunikationsarten eingesetzt werden.

Ein Safety-Protokoll-Layer funktioniert immer in eine Richtung und benötigt keinen Rückkanal bzw. benötigt keine Quittierung mehr. Diese bedeutet, dass ein Empfänger alle die Sicherheit betreffenden Informationen über das gesendete Telegramm bekommen muss. Der Sender muss nichts mehr davon wissen, ob ein Empfänger etwas empfangen hat oder nicht. Er fungiert nur noch als eine Datenquelle.

Erfindungsgemäß ist bei dieser Kommunikationsart kein Quittierungstelegramm mehr nötig, damit sind Kommunikationsarten möglich, die nicht auf einer Punkt-zu-Punkt-Verbindungsart basieren. Da es mit diesem fehlersicheren Kommunikationsverfahren und der Verbindungsidentifizierung nun möglich ist, freie Kommunikationsarten für sicherheitsgerichtete Verbindungen einzusetzen, können diese fehlersicheren Anwendungen wesentlich flexibler in Kundenanlagen realisiert werden.

Das Verfahren für die fehlersichere Verbindungsidentifizierung ist demnach recht einfach gehalten und es ist demnach also ein geringerer Safety-Overhead in Softwarefunktionen zu realisieren, welches zu einer guten Runtime Performance führt. Im Vergleich zu bisherigen Safety-Protokollen, die komplizierte Statemachines wegen dem Quittierungstelegramm benötigen und der damit verbundenen gegenseitigen Absicherungen, wurden wesentlich aufwändige Protokolle implementiert. Nun ist es mit Vorteil so, dass das versendete "Sicherheits"-Telegramm selbst die logischen Absicherungen über den Zeitstempel für die Daten-Senkenfunktion auf Basis der im Sicherheitstelegramm enthaltenen Daten gewährleistet.

Weiterhin wird es als vorteilhaft auch angesehen, wenn über den eindeutigen Identifikator eine Sicherstellung der Zuordnung des Senke-Datendienstes zu dem richtigen Quell-Datendienst erfolgt, dazu ist der Identifikator sowohl beim Quell-Datendienst als auch beim Senke-Datendienst bekannt und der Senke-Datendienst hat zu prüfen, ob die Daten vom gewünschten Quell-Datendienst stammen.

Für eine Zeitsynchronisierung werden auf vorteilhafte Art und Weise die lokale Zeitbasis im Senke-Datendienst zur Ermittlung des lokalen Zeitstempels über einen sicherheitsgerichteten Zeitserver mit der Zeitbasis im Quell-Datendienst abgeglichen. Das Verfahren wird mit Vorteil in einer Automatisierungsanlage eingesetzt, in welcher die Kommunikation zwischen Automatisierungsgeräten auf funktionale Sicherheit ausgelegt ist und nach dem Publisher/Subscriber Broadcast oder Multitaskmechanismus arbeitet, wobei ein Sicherheitsprotokoll verwendet wird.

Ebenfalls wird die eingangs genannte Aufgabe durch ein Automatisierungssystem mit einer Automatisierungssteuerung, in welcher ein Quell-Datendienst Telegramme für Automatisierungsgeräte mit jeweils einem Senke-Datendienst bereitstellt, wobei die Automatisierungssteuerung derart ausgestaltet ist, dass dem Quell-Datendienst ein eindeutiger Identifikator zugewiesen ist, und Mittel aufweist, welche je einen Zeitstempel zu einem zu versendenden Telegramm zuordnen, dadurch gelöst, dass die Automatisierungsgeräte derart ausgestaltet sind, dass sie ein Prüfmittel umfassen, mit welchem im Senke-Datendienst geprüft wird, ob der Zeitstempel eines gerade eingehenden Telegramms älter ist, als der Zeitstempel eines Vorgängertelegramms, wobei mit dem Eingang des Vorgängertelegramms ein Überwachungszähler gestartet wird und zusätzlich geprüft wird, ob das gerade eingehende Telegramm innerhalb einer vorgebbaren Überwachungszeit angekommen ist, zusätzlich wird im Senke-Datendienst ein lokaler Zeitstempel einer lokalen Zeitbasis mit dem zugehörigen Zeitstempel des gerade eingehenden Telegramms verglichen und es wird geprüft, ob eine sich durch den Vergleich ergebene Differenz eine vorgebbare Zeitdauer nicht übersteigt, ein im Senke-Datendienst ankommendes Telegramm nur dann als gültig übernommen wird, wenn zusätzlich erfüllt ist, dass der Zeitstempel des ankommenden Telegramms größer ist als der Zeitstempel des zuletzt als gültig übernommenen Telegramms, wobei in einem letzten Schritt die Daten als gültig erklärt werden, wenn die vorangegangenen Prüfungen positiv ausgefallen sind, andererseits wird eine fehlersichere Reaktion ausgelöst.

Mit einem derartigen Automatisierungssystem kann nun zwischen einer Automatisierungssteuerung als ein Quell-Datendienst und zumindest einem Senke-Datendienst in Automatisierungsgeräten nach dem Publisher/Subscriber Kommunikationsverfahren kommuniziert werden, denn ein Quittungsmechanismus ist jetzt nicht mehr nötig. Die Funktionen im Senke-Datendienst gewährleisten auf der Basis der im Sicherheitstelegramme enthaltenen Daten, ob das gesendete Telegramm invalide ist.

Dabei ist es weiterhin von Vorteil, wenn die Mittel weiterhin dazu ausgestaltet sind, einen eindeutigen Identifikator zur Sicherstellung der Zuordnung des Senke-Datendienstes zu dem richtigen Quell-Datendienst zuzuordnen und weiterhin sind die Prüfmittel ausgestaltet, diese Zuordnung zu prüfen.

Zur Synchronisierung ist ein sicherheitsgerichteter Zeitserver vorhanden, welcher mit der Automatisierungssteuerung und den Automatisierungsgeräten in Verbindung steht, um die lokale Zeitbasis im Senke-Datendienst zur Ermittlung des lokalen Zeitstempels mit der Zeitbasis zur Ermittlung des Sende-Zeitstempels im Quell-Datendienst abzugleichen.

Zusammenfassend kann gesagt werden, dass wenn die Quell-Datendienste Telegramme senden und die Senke-Datendienste diese in den Telegrammen enthaltenen Daten empfangen, so sollen die Senke-Datendienste keine Antwort an die Quell-Datendienste schicken müssen. Daraus ergeben sich folgende sicherheitsgerichtete technische Betrachtungen:
a) Sicherstellung der richtigen Daten-Quellfunktionen.
b) Überwachung der Daten-Quellfunktion oder des Übertragungsweges auf Ausfall.
c) Aktualität der Daten.
d) Überwachung auf unerwünschte Wiederholungs-Sequenzen.
e) Überwachung der korrekten Reihenfolge.
f) Gepufferte Daten bei Wiederanlauf.
g) Überwachung der Datenintegrität.

Sollte eines der beschriebenen technischen Kriterien fehlerhaft sein, so muss ein Senke-Datendienst dies erkennen und eine sicherheitsgerichtete Reaktion daraus ableiten können (z.B. Ausgabe von Ersatzwerten). Der Quell-Datendienst kann diese Überprüfungen nicht gewährleisten, muss aber entsprechende Daten liefern, damit der Senke-Datendienst einen Fehler erkennen kann. Der Quell-Datendienst stellt dauerhaft Daten bereit und der Senke-Datendienst entscheidet darüber, ob die Daten gültig sind um sie zu übernehmen oder nicht.

Zu a) Das Verwenden einer eindeutigen Adresse, die den Quell-Datendienst beschreibt, kann z.B. auch dadurch gelöst werden, dass eine UUID eingesetzt wird. Diese Adresse muss dann bei der Quelle und der Senke bekannt sein und die Senke hat daraufhin zu prüfen, ob die Daten auch von der gewünschten Quelle stammen.

Zu b) und c) Es wird ein Zeitstempel pro zu sendenden Telegramm in dem Quell-Datendienst gebildet, welcher in dem Senke-Datendienst überprüft wird. Das bedeutet, es ist zu überprüfen, dass eine positive Änderung des Zeitstempels innerhalb einer gewissen Überwachungszeit eintritt. Die Überwachungszeit ist dabei anwendungsspezifisch und Teil einer Projektierung der fehlersicheren Kommunikation. Der Quell-Datendienst schickt für jedes Senden eines neuen Telegrammes einen neuen Zeitstempel mit. Durch den Zeitstempel und der Überprüfung der Überwachungszeit wird das Problem der Aktualität der Daten oder der Ausfall des Quell-Datendienstes oder des Übertragungsweges gelöst.

Damit keine Wiederholungs-Sequenz, Alt-Telegramme oder Telegramme in falscher Reihenfolge von dem Senke-Datendienst als gültig übernommen werden, muss der Senke-Datendienst den Zeitstempel zusätzlich so prüfen, dass Telegramme nur dann übernommen werden, wenn der neu empfangene Zeitstempel größer als der zuletzt als gültig akzeptierte Zeitstempel ist. Dies löst das Problem, der korrekten Reihenfolge und unerwünschter Wiederholungs-Sequenzen.

Zu f) Der Senke-Datendienst muss den empfangenen Zeitstempel gegen seine lokal ermittelte Zeit prüfen. Ein Zeitunterschied muss innerhalb der projektierten Überwachungszeit liegen. Ist dies nicht der Fall, wird eine sicherheitsgerichtete Reaktion ausgeführt und ein Neu-Anlauf muss quittiert werden. Um Zeitänderungen zwischen dem Senke-Datendienst und dem Quell-Datendienst bei einem Neu-Anlauf zu beherrschen, darf der Quell-Datendienst die Systemzeit nur bei einem Neu-Start übernehmen. Die darauffolgende Zeitstempel-Bildung muss dann innerhalb des Senke-Datendienstes durchgeführt werden. Der Senke-Datendienst übernimmt die Systemzeit bei Neu-Anlauf beim Empfangen eines ersten gültigen Telegrammes. Die darauffolgende Zeitstempel-Bildung muss dann innerhalb der Quell-Datendienstes durchgeführt werden.

Ein Ausführungsbeispiel des erfindungsgemäßen Verfahrens und des erfindungsgemäßen Automatisierungssystems wird nachfolgend anhand der Zeichnung erläutert. Dabei zeigen:
- FIG 1: eine sichere Verbindungsidentifizierung,
- FIG 2: eine schematische Darstellung eines Automatisierungssystems in einem Broadcast-Betrieb und
- FIG 3: eine detaillierte Darstellung eines Quell-Datendienstes und eines Senke-Datendienstes.

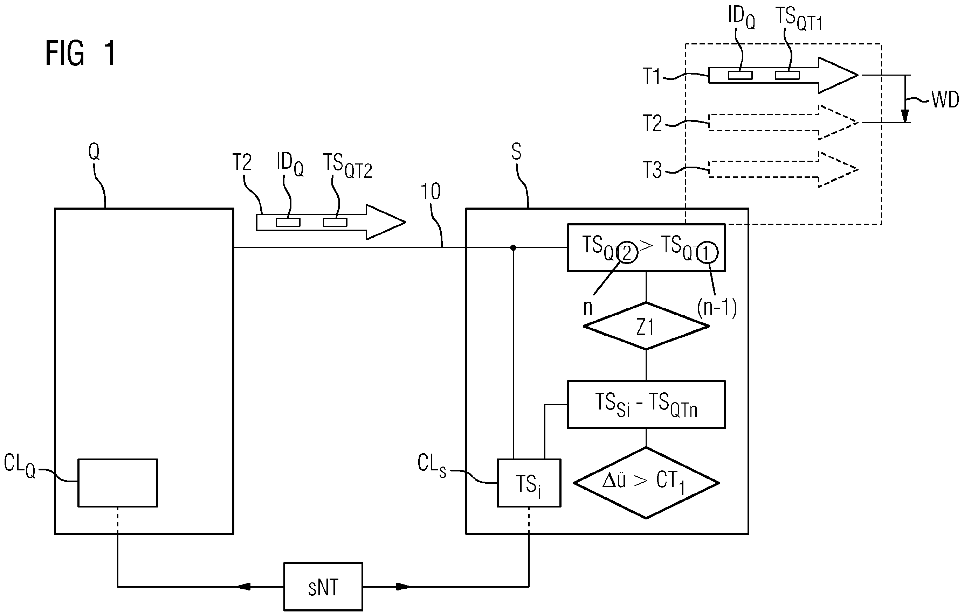

Gemäß FIG 1 ist ein Quell-Datendienst Q und ein Senke-Datendienst S dargestellt, an, mit welchen ein Verfahren zur funktional sicheren Verbindungsidentifizierung für einen Datenaustausch mittels eines Telegramms T durchgeführt wird. Dem Quell-Datendienst Q ist ein eindeutiger Identifikator ID_{Q} zugewiesen und jedem zu versendenden Telegramm T wird ein Zeitstempel TS_{Q} zugeordnet. Beispielhaft wird über den Kommunikationskanal 10 ein zweites Telegramm T2 gerade vom Quell-Datendienst Q versendet, wobei ein erstes Telegramm T1 zuvor beim Senke-Datendienst S bereits angekommen ist. Das zweite Telegramm T2 weist den Identifikator ID_{Q} und einen zweiten Zeitstempel TS_{QT2} auf.

In dem gestrichelten Kästchen oberhalb des Senke-Datendienstes S sind die Telegramme T aufgezeigt. Das erste Telegramm T1 ist bereits angekommen, das zweite Telegramm T2 und das dritte Telegramm T3 werden in der Zukunft noch ankommen.

Im Senke-Datendienst S wird nun geprüft, ob der Zeitstempel TS_{QT2} des gerade eingehenden zweiten Telegramms T2 älter ist als der Zeitstempel TS_{QT1} des Vorgänger-Telegramms T1, wobei mit dem Eingang des Vorgänger-Telegramms T1 ein Überwachungszähler WD gestartet wird und zusätzlich geprüft wird, ob das gerade eingehende Telegramm T2 innerhalb einer vorgebbaren Überwachungszeit Z1 angekommen ist.

Darüber hinaus wird im Senke-Datendienst S ein lokaler Zeitstempel TS_{Si} einer lokalen Zeitbasis CL_{S} mit dem zugehörigen Zeitstempel TS_{QT2} des gerade eingehenden Telegramms T2 verglichen und es wird geprüft, ob eine sich durch den Vergleich ergebene Differenz Δü eine vorgebbare Zeitdauer CT1 nicht übersteigt.

Ein im Senke-Datendienst S ankommendes Telegramm T1,T2,T3 wird nur dann als gültig vernommen, wenn zusätzliche erfüllt ist, dass der Zeitstempel TS_{T2} des ankommenden Telegramms T2 größer ist als der Zeitstempel TS_{QT-} des zuletzt als gültig übernommenen Telegramms T1, wobei in einem letzten Schritt die Daten als gültig erklärt werden, wenn die vorangegangenen Prüfungen positiv ausgefallen sind, andererseits wird eine fehlersichere Reaktion ausgelöst.

Der Senke-Datendienst S prüft, ob die Daten von einem gewünschten Quell-Datendienst Q stammen. Über den eindeutigen Identifikator ID_{Q} wird dies sichergestellt, dazu ist der Identifikator ID_{Q} sowohl bei Quell-Datendienst Q als auch beim Senke-Datendienst S bekannt.

Die lokale Zeitbasis CL_{S} des Senke-Datendienstes S wird mit der lokalen Zeitbasis CL_{Q} des Quell-Datendienstes Q über einen sicherheitsgerichteten Zeitserver sNT abgeglichen.

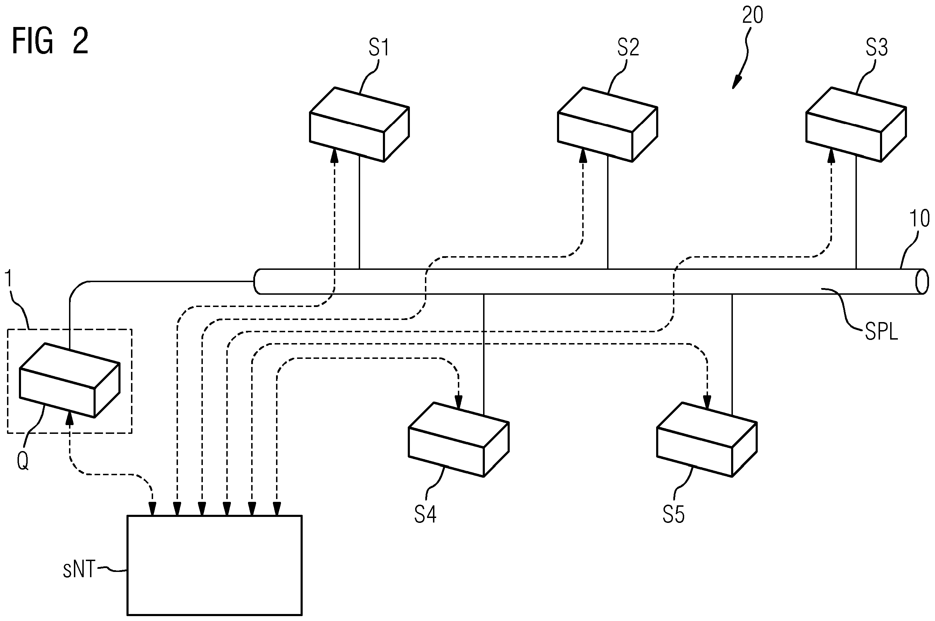

Die FIG 2 zeigt eine schematische Darstellung des Prinzips für einen Broadcast-Mechanismus zwischen einem Quell-Datendienst Q und einem ersten Senke-Datendienst S1, einem zweiten Senke-Datendienst S2, einen dritten Senke-Datendienst S3, einem vierten Senke-Datendienst S4 und einem fünften Senke-Datendienst S5. Alle zuvor genannten Kommunikationsteilnehmer sind an den Kommunikationskanal 10 angeschlossen. Der Kommunikationskanal 10 ist als ein Safety-Protokoll-Layer SPL ausgestaltet. Sendet nun der Quell-Datendienst Q in einen Broadcast-Dienst zu allen Senke-Datendiensten S1,S2,S3,S4,S5 ein Telegramm T so läuft in jedem Senke-Datendienst S1,S2,S3,S4,S5 das in FIG 1 erläuterte Verfahren ab. Von Vorteil ist es nun, dass hier eine sicherheitsgerichtete Verbindung aufgebaut werden kann ohne, dass die Senke-Datendienste S1,S2,S3,S4,S5 den Empfang eines Telegrammes T an den Quell-Datendienst Q quittieren müssen, da bereits alle Informationen in dem empfangenen Telegramm T zur Prüfung enthalten sind und insbesondere über den Abgleich des sicherheitsgerichteten Zeitservers (gestrichelte Linien) die Prüfungen hinsichtlich der Überwachungszeit ablaufen können.

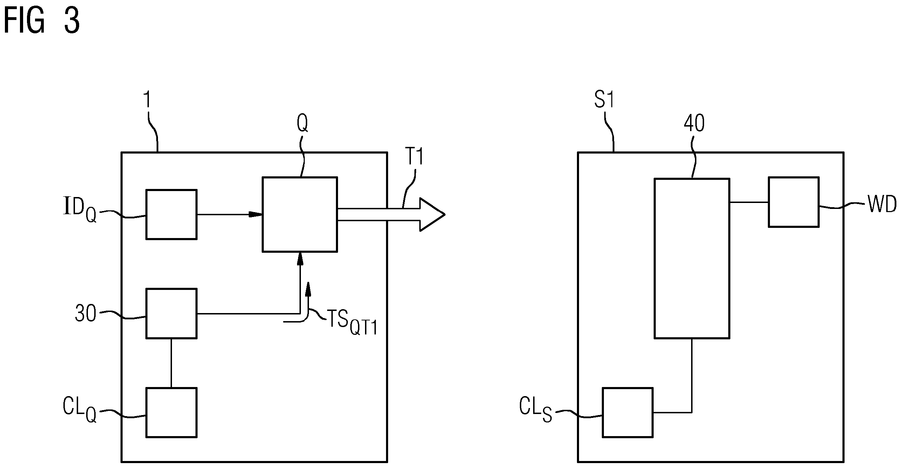

Mit der FIG 3 ist ein Quell-Datendienst Q und ein Senke-Datendienst S1 dargestellt. Der Quell-Datendienst Q ist beispielsweise in einer Automatisierungssteuerung 1 implementiert. Die Automatisierungssteuerung 1 ist dann derart ausgestaltet, dass im Quell-Datendienst Q ein eindeutiger Identifikator ID_{Q} zugewiesen ist, und das Mittel 30 vorhanden sind, welche je einen Zeitstempel TS_{QT1} einem zu versendeten Telegramm T1 zuordnen.

Ein zugehöriges Automatisierungsgerät S1 ist dabei derart ausgestaltet, dass es ein Prüfmittel 40 umfasst, mit welchem im Senke-Datendienst S geprüft wird, ob der Zeitstempel TS_{QT2} eines eingehenden Telegramms älter ist als der Zeitstempel eines Vorgänger-Telegramms, wobei mit dem Eingang des Vorgänger-Telegramms ein Überwachungszähler WD gestartet wird und zusätzlich geprüft wird, ob das gerade eingehende Telegramm T innerhalb einer vorgebbaren Überwachungszeit Z1 angekommen ist, zusätzlich wird im Senke-Datendienst S ein lokaler Zeitstempel TS_{QT1},TS_{QT2} des gerade eingehenden Telegramms T mit dem eines Vorgänger-Telegramms verglichen und es wird geprüft, ob eine sich durch den Vergleich ergebene Differenz eine vorgebbare Zeitdauer nicht übersteigt, ein im Senke-Datendienst S ankommendes Telegramm wird nur dann als gültig übernommen, wenn zusätzlich erfüllt ist, dass der Zeitstempel des ankommenden Telegramms T größer ist als der Zeitstempel des zuletzt als gültig übernommenen Telegramms, wobei in einem letzten Schritt die Daten als gültig erklärt werden, wenn die vorangegangenen Prüfungen positiv ausgefallen sind, andererseits wird eine fehlersichere Reaktion ausgelöst.

## Patentansprüche

1. Verfahren zur funktional sicheren Verbindungsidentifizierung für einen Datenaustausch mittels eines Telegramms (T) zwischen einem Quell-Datendienst (Q) und einem Senke-Datendienst (S) über einen Kommunikationskanal (10) in einem Kommunikationssystem (11), wobei
dem Quell-Datendienst (Q) ein eindeutiger Identifikator (ID_{Q}) zugewiesen wird,
je ein Zeitstempel (TS_{QT1}, TS_{QT2},) zu einem zu versendenden Telegramm (T1,T2,T3) im Quell-Datendienst (Q) zugeordnet wird,
**gekennzeichnet durch** folgende Schritte:
im Senke-Datendienst (S) geprüft wird, ob der Zeitstempel (TS_{QT2}) eines gerade eingehenden Telegramms (T2) älter ist als der Zeitstempel (TS_{QT1}) eines Vorgänger Telegramms (T1), wobei mit dem Eingang des Vorgänger Telegramms (T1) ein Überwachungszähler (WD) gestartet wird und zusätzlich geprüft wird,
ob das gerade eingehende Telegramm (T2) innerhalb einer vorgebbaren Überwachungszeit (Z1) angekommen ist,
zusätzlich wird im Senke-Datendienst (S) ein lokaler Zeitstempel (TS_{Si}) einer lokalen Zeitbasis (CL_{S}) mit dem zugehörigen Zeitstempel (TS_{QT2}) des gerade eingehenden Telegramms (T2) verglichen und es wird geprüft, ob eine sich durch den Vergleich ergebende Differenz (ΔÜ) eine vorgebbare Zeitdauer (CT1) nicht übersteigt,
ein im Senke-Datendienst (S) ankommendes Telegramm (T1,T2,T3) nur dann als gültig übernommen wird, wenn zusätzlich erfüllt ist, dass der Zeitstempel (TS_{T2}) des ankommenden Telegramms (T2) größer ist als der Zeitstempel (TS_{T1}) des zuletzt als gültig übernommenen Telegramms (T1),
wobei in einem letzten Schritt die Daten als gültig erklärt werden, wenn die vorangegangen Prüfungen positiv ausgefallen sind, anderseits wird eine fehlersichere Reaktion ausgelöst.

2. Verfahren nach Anspruch 1, wobei über den eindeutigen Identifikator (ID_{Q}) eine Sicherstellung der Zuordnung des Senke-Datendienst (S) zu dem richtigen Quell-Datendienst (Q) erfolgt, dazu ist der Identifikator (ID_{Q}) sowohl beim Quell-Datendienst (Q) als auch beim Senke-Datendienst (S) bekannt und der Senke-Datendienst (S) hat zu prüfen, ob die Daten vom gewünschten Quell-Datendienst (Q) stammen.

3. Verfahren nach Anspruch 1 oder 2, wobei die lokale Zeitbasis (CL_{S}) im Senke-Datendienst (S) zur Ermittlung des lokalen Zeitstempels (TS_{Si}) über einen sicherheitsgerichteten Zeitserver (sNT) mit der Zeitbasis (CL_{Q}) im Quell-Datendienst (Q) abgeglichen wird.

4. Verfahren nach Anspruch 1 bis 3 eingesetzt in einer Automatisierungsanlage in welcher die Kommunikation zwischen Automatisierungsgeräten (Q,S1,S2,S3,S4,S5) auf funktionale Sicherheit ausgelegt ist und nach dem Publisher/Subscriber-, Broadcast- oder Multicastmechanismen arbeitet, wobei ein Sicherheits-Protokoll verwendet wird.

5. Automatisierungssystem (20) mit einer Automatisierungssteuerung (1), in welcher ein Quell-Datendienst (Q) Telegramme (T) für Automatisierungsgeräte (S1,S2,S3,S4,S5) mit jeweils einem Senke-Datendienst (S) bereitstellt,
die Automatisierungssteuerung (1) ist derart ausgestaltet, dass dem Quell-Datendienst (Q) ein eindeutiger Identifikator (ID_{Q}) zugewiesen ist, und Mittel (30) aufweist, welche je einen Zeitstempel (TS_{QT1}, TS_{QT2}, TS_{QT2}) zu einem zu versendenden Telegramm (T1,T2,T3) zuordnen,
**dadurchgekennzeichnet**, dass
die Automatisierungsgeräte (S1,S2,S3,S4,S5) derart ausgestaltet sind, dass sie ein Prüfmittel (40) umfassen, mit welchem im Senke-Datendienst (S) geprüft wird,
ob der Zeitstempel (TS_{QT2}) eines gerade eingehenden Telegramms (T2) älter ist als der Zeitstempel (TS_{QT1}) eines Vorgänger Telegrams (T1), wobei mit dem Eingang des Vorgänger Telegramms (T1) ein Überwachungszähler (WD) gestartet wird und zusätzlich geprüft wird, ob das gerade eingehende Telegramm (T2) innerhalb einer vorgebbaren Überwachungszeit (Z1) angekommen ist, zusätzlich wird im Senke-Datendienst (S) ein lokaler Zeitstempel (TS_{Si}) einer lokalen Zeitbasis (CL_{S}) mit dem zugehörigen Zeitstempel (TS_{QT2}) des gerade eingehenden Telegramms (T2) verglichen und es wird geprüft, ob eine sich durch den Vergleich ergebende Differenz (ΔÜ) eine vorgebbare Zeitdauer (CT1) nicht übersteigt,
ein im Senke-Datendienst (S) ankommendes Telegramm (T1,T2,T3) nur dann als gültig übernommen wird, wenn zusätzlich erfüllt ist, dass der Zeitstempel (TS_{T2}) des ankommenden Telegramms (TST2) größer ist als der Zeitstempel (TS_{T1}) des zuletzt als gültig übernommenen Telegramms (TS_{T1}),
wobei in einem letzten Schritt die Daten als gültig erklärt werden, wenn die vorangegangen Prüfungen positiv ausgefallen sind, anderseits wird eine fehlersichere Reaktion ausgelöst.

6. Automatisierungssystem (20) nach Anspruch 5, wobei die Mittel (30) weiterhin dazu ausgestaltet sind einen eindeutigen Identifikator (ID_{Q}) zur Sicherstellung der Zuordnung des Senke-Datendienst (S) zu dem richtigen Quell-Datendienst (Q) zuzuordnen und weiterhin sind die Prüfmittel (40) ausgestaltet diese Zuordnung zu prüfen.

7. Automatisierungssystem (20) nach Anspruch 5 oder 6, wobei ein sicherheitsgerichteter Zeitserver (sNT) vorhanden ist, welcher mit der Automatisierungssteuerung (1) und den Automatisierungsgeräten (S1,S2,S3,S4,S5) in Verbindung steht, um die lokale Zeitbasis (CL_{S}) im Senke-Datendienst (S) zur Ermittlung des lokalen Zeitstempels (TS_{Si}) über einen mit der Zeitbasis (CL_{Q}) im Quell-Datendienst (Q) abzugleichen.

## Claims

1. Method for functionally secure connection identification for a data exchange by means of a telegram (T) between a source data service (Q) and a sink data service (S) via a communication channel (10) in a communication system (11), wherein
the source data service (Q) is assigned a unique identifier (ID_{Q}) ,
a time stamp (TS_{QT1}, TS_{QT2}) is allocated to each telegram (T1,T2,T3) to be transmitted in the source data service (Q),
**characterised by** the following steps:
it is checked in the sink data service (S) whether the time stamp (TS_{QT2}) of a currently incoming telegram (T2) is older than the time stamp (TS_{QT1}) of a predecessor telegram (T1),
wherein on receipt of the predecessor telegram (T1) a monitoring counter (WD) is started and it is additionally checked whether the currently incoming telegram (T2) has arrived within a predeterminable monitoring time (Z1);
additionally, in the sink data service (S) a local time stamp (TS_{Si}) of a local time basis (CL_{S}) is compared with the associated time stamp (TS_{QT2}) of the currently incoming telegram (T2) and it is checked whether a difference (ΔÜ) resulting from the comparison does not exceed a predeterminable period of time (CT1),
a telegram (T1,T2,T3) arriving in the sink data service (S) is then only accepted as valid if it is additionally fulfilled that the time stamp (TS_{T2}) of the arriving telegram (T2) is greater than the time stamp (TS_{T1}) of the telegram (T1) most recently accepted as valid,
wherein in a final step the data is declared valid if the preceding checks have turned out positively, otherwise a failsafe reaction is triggered.

2. Method according to claim 1, wherein, via the unique identifier (ID_{Q}), the allocation of the sink data service (S) to the correct source data service (Q) is ensured, to this end the identifier (IDQ) is both known to the source data service (Q) and also at the sink data service (S) and the sink data service (S) has to check whether the data originates from the desired source data service (Q).

3. Method according to claim 1 or 2, wherein the local time basis (CL_{S}) in the sink data service (S) for determining the local time stamp (TS_{Si}) is synchronised with the time basis (CL_{Q}) in the source data service (Q) via a safety-oriented time server (sNT).

4. Method according to claim 1 to 3, used in an automation installation, in which the communication between automation devices (Q,S1,S2,S3,S4,S5) is designed to be functionally secure and operates in accordance with the publisher/subscriber, broadcast or multitask mechanisms, wherein a safety protocol is used.

5. Automation system (20) with an automation controller (1), in which a source data service (Q) provides telegrams (T) for automation devices (S1,S2,S3,S4,S5) with a sink data service (S) in each case,
the automation controller (1) is embodied such that a unique identifier (ID_{Q}) is assigned to the source data service (Q), and has means (30), which allocate a time stamp (TS_{QT1}, TS_{QT2}, TS_{QT2}) to each telegram (T1,T2,T3) to be transmitted,
**characterised in that**
the automation devices (S1,S2,S3,S4,S5) are embodied such that they comprise a checking means (40), with which it is checked in the sink data service (S)
whether the time stamp (TS_{QT2}) of a currently incoming telegram (T2) is older than the time stamp (TSQT1) of a predecessor telegram (T1), wherein on receipt of the predecessor telegram (T1) a monitoring counter (WD) is started and it is additionally checked whether the currently incoming telegram (T2) has arrived within a predeterminable monitoring time (Z1); additionally, in the sink data service (S) a local time stamp (TS_{Si}) of a local time basis (CL_{S}) is compared with the associated time stamp (TS_{QT2}) of the currently incoming telegram (T2) and it is checked whether a difference (ΔÜ) resulting from the comparison does not exceed a predeterminable period of time (CT1),
a telegram (T1,T2,T3) arriving in the sink data service (S) is then only accepted as valid if it is additionally fulfilled that the time stamp (TS_{T2}) of the arriving telegram (TST2) is greater than the time stamp (TS_{T1}) of the telegram (TS_{T1}) most recently accepted as valid,
wherein in a final step the data is declared valid if the preceding checks have turned out positively, otherwise a failsafe reaction is triggered.

6. Automation system (20) according to claim 5, wherein the means (30) are furthermore embodied to allocate a unique identifier (ID_{Q}) for ensuring the allocation of the sink data service (S) to the correct source data service (Q), and the checking means (40) are furthermore embodied to check this allocation.

7. Automation system (20) according to claim 5 or 6, wherein a safety-oriented time server (sNT) is present, which is connected to the automation controller (1) and the automation devices (S1,S2,S3,S4,S5) in order to synchronise the local time basis (CL_{S}) in the sink data service (S) for determining the local time stamp (TS_{Si}) via one with the time basis (CL_{Q}) in the source data service (Q).

## Revendications

1. Procédé d'identification d'une connexion sécurisée fonctionnellement pour un échange de données au moyen d'un télégramme (T) entre un service (Q) de données source et un service (S) de données puits par un canal (10) de communication dans un système (11) de communication, dans lequel
on affecte un identifiant (ID_{q}) univoque au service (Q) de données source,
on associe dans le service (Q) de données source respectivement un horodatage (TS_{QT1}, TS_{qt2}), à un télégramme (T1,T2,T3) à envoyer,
**caractérisé par** les stades suivants :
on contrôle dans le service (S) de données puits, si l'horodatage (TS_{qt2}) d'un télégramme (T2) venant d'entrer est plus ancien que l'horodatage (TS_{qt1}) d'un télégramme (T1) précédent, dans lequel on fait démarrer un compteur (WD) de contrôle avec l'entrée du télégramme (T1) précédent et on contrôle, en outre, si le télégramme (T2), qui vient d'entrer,
est arrivé dans un temps (Z1) de contrôle pouvant être donné à l'avance,
on compare en outre dans le service (S) de données puits un horodatage (TSₛ₁) local d'une base (CL_{S}) de temps locale à l'horodatage (TS_{qt2}) associé du télégramme (T2), qui vient d'entrer, et on contrôle, si une différence (ΔÜ) obtenue par la comparaison ne dépasse pas une durée (CT1) pouvant être donnée à l'avance,
on ne prend en charge comme valable un télégramme (T1, T2, T3) arrivant dans le service (S) de données puits, que si est satisfait en outre, que l'horodatage (TSₜ₂) du télégramme (T2) arrivant est plus grand que l'horodatage (TSₜ₁) du télégramme (T1) pris en charge comme valable en dernier,
dans lequel dans le dernier stade on déclare les données comme valables, si les contrôles précédents sont positifs, sinon on déclenche une réaction de sécurisation à l'erreur.

2. Procédé suivant la revendication 1, dans lequel, par l'identifiant (ID_{q}) univoque, on s'assure de l'association du service (S) de données puits au service (Q) de données source correct, à cet effet, l'identifiant (ID_{q}) est connu à la fois au service (Q) de données source et au service (S) de données puits et le service (S) de données puits a à contrôler si les données sont issues du service (Q) de données source souhaité.

3. Procédé suivant la revendication 1 ou 2, dans lequel la base (CL_{S}) de temps locale dans le service (S) de données puits est, pour la détermination de l'horodatage (TSₛᵢ) local, égalisée à la base (CL_{q}) de temps dans le service (Q) de données source par un serveur (ₛNT) de temps de sécurisation.

4. Procédé suivant la revendication 1 à 3, utilisé dans une installation d'automatisation, dans laquelle la communication entre des appareils (Q, S1, S2, S3, S4, S5) d'automatisation est conçue pour une sécurisation fonctionnelle et fonctionne suivant le mécanisme publisher/subscriber, le mécanisme broadcast ou les mécanismes multicast, un programme de sécurité étant utilisé.

5. Système (20) d'automatisation comprenant une commande (1) d'automatisation, dans laquelle un service (Q) de données source procure des télégrammes (T) pour des appareils (S1, S2, S3, S4, S5) d'automatisation ayant chacun un service (S) de données puits,
la commande (1) d'automatisation est conformée de manière à affecter un identifiant (ID_{q}) univoque au service (Q) de données source et a des moyens (30), qui associent respectivement un horodatage (TS_{qt1}, TS_{qt2}, TS_{qt2}) à un télégramme (T1, T2, T3) à envoyer,
**caractérisé en ce que**
les appareils (S1, S2, S3, S4, S5) d'automatisation sont conformés de manière à comprendre un moyen (40) de contrôle, par lequel on contrôle dans le service (S) de données puits si l'horodatage (TS_{qt2}) d'un télégramme (T2), qui vient d'entrer, est plus ancien que l'horodatage (TS_{qt1}) d'un télégramme (T1) précédent, dans lequel avec l'entrée du télégramme (T1) précédent, on lance un compteur (W) de contrôle et on contrôle, en outre, si le télégramme (T2), qui vient d'entrer, est arrivé dans un temps (Z1) de contrôle pouvant être donné à l'avance, on compare en outre, dans le service (S) de données puits un horodatage (TSₛᵢ) local d'une base (CL_{S}) de temps locale à l'horodatage (TS_{QT2}) associé du télégramme (T2), qui vient d'entrer, et on contrôle si une différence (ΔÜ) obtenue par la comparaison, ne dépasse pas une durée (CT1) pouvant être donnée à l'avance,
on ne prend en charge comme valable un télégramme (T1, T2, T3) arrivant dans le service (S) de données puits, que si est satisfait en outre, que l'horodatage (TSₜ₂) du télégramme (T2) arrivant est plus grand que l'horodatage (TSₜ₁) du télégramme (T1) pris en charge comme valable en dernier,
dans lequel dans le dernier stade on déclare les données comme valables, si les contrôles précédents sont positifs, sinon on déclenche une réaction de sécurisation à l'erreur.

6. Système (20) d'automatisation suivant la revendication 5, dans lequel, les moyens (30) sont conformés en outre pour associer un identifiant (ID_{q}) univoque pour assurer l'association du service (S) de données puits au service (Q) de données source correct et en outre les moyens (40) de contrôle sont constitués pour contrôler cette association.

7. Système d'automatisation suivant la revendication 5 ou 6, dans lequel il y a un serveur (ₛNT) de temps de sécurisation, qui est en liaison avec la commande (1) d'automatisation et avec les appareils (S1, S2, S3, S4, S5) d'automatisation, afin d'égaliser la base (CL_{S}) de temps locale dans le service (S) de données puits pour la détermination de l'horodatage (TSₛᵢ) local avec la base (CL_{q}) de temps dans le service (Q) de données source.
